Europäisches Patentamt

European Patent Office

Office européen des brevets

(11) Veröffentlichungsnummer: **0 512 203 A1**

## (12) EUROPÄISCHE PATENTANMELDUNG

(21) Anmeldenummer: **92102887.4**

(22) Anmeldetag: **21.02.92**

(51) Int. Cl.⁵: **F02B 27/02**

(30) Priorität: **06.05.91 DE 4114736**

(43) Veröffentlichungstag der Anmeldung:
**11.11.92 Patentblatt 92/46**

(84) Benannte Vertragsstaaten:
**DE FR GB IT**

(71) Anmelder: **Bayerische Motoren Werke Aktiengesellschaft**
**Patentabteilung AJ-3 Postfach 40 02 40**
**Petuelring 130**
**W-8000 München 40(DE)**

(72) Erfinder: **Bräutigam, Ernst**
**Lena-Christ-Strasse 6**
**W-8056 Neufahrn(DE)**
Erfinder: **Farsch, Hans**
**Ouiddestrasse 25**
**W-8000 München 83(DE)**
Erfinder: **Fröhlich, Klaus**
**Radlkoferstrasse 11a**
**W-8000 München 70(DE)**
Erfinder: **Schiffer, Peter**
**Käthe-Kollwitz-Strasse 6**
**W-8044 Unterschleissheim(DE)**

(74) Vertreter: **Bücken, Helmut et al**
**Bayerische Motoren Werke**
**Aktiengesellschaft Postfach 40 02 40**
**Petuelring 130 - AJ-3**
**W-8000 München 40(DE)**

(54) **Sauganlage für eine insbesondere vierzylindrige Brennkraftmaschine.**

(57) Beschrieben ist eine äußerst kompakte Bauweise einer differenzierten Sauganlage einer vierzylindrigen Brennkraftmaschine. Jeweils zwei Zylinder-Saugrohre (1a-1d) münden nebeneinanderliegend in gegenüberliegende Wände (8a,8b) eines kleinvolumigen Behälters (7). Diese Behälterwände sind durch eine zwischen den nebeneinandermündenden Saugrohren verlaufende Zwischenwand (5) verbunden. Die Zwischenwand weist einen von einer Klappe (6) verschließbaren Durchbruch auf. Es ensteht somit ein äußerst kleinvolumiger Behälter, der gleichzeitig eine Zusammenführung jeweils zweier Zylindersaugrohre zu einem Gruppensaugrohr (2a,2b) schafft und darüber hinaus mit dem Durchbruch eine verschließbare Übertrittsstelle zwischen den beiden Gruppensaugrohren bildet.

Fig. 1

EP 0 512 203 A1

Rank Xerox (UK) Business Services

Die Erfindung betrifft eine Sauganlage für eine mehrzylindrige, insbesondere vierzylindrige Brennkraftmaschine, wobei die Saugrohre jeweils zweier Zylinder gruppenweise zusammengefaßt und die sich daraus ergebenden Gruppensaugrohre durch eine verschließbare Übertrittsstelle miteinander verbunden sind.

Eine Sauganlage mit diesen Merkmalen ist aus der DE-OS 22 49 733 bekannt. Die verschließbare bzw. zuschaltbare Übertrittsstelle dient dabei dazu, in Abhängigkeit vom Betriebspunkt der Brennkraftmaschine die optimale Sauganlagen-Dynamik einstellen zu können. Durch Berechnungen sowie durch Versuche wurde erkannt, daß optimale Ergebnisse dann erzielt werden, wenn das Sauganlagen-Volumen im Bereich der Übertrittsstelle äußerst gering gehalten wird. Die Erfindung hat sich daher die Aufgabe gestellt, für eine Sauganlage nach dem Oberbegriff des Anspruchs 1 eine äußerst kleinvolumige Bauweise aufzuzeigen. Zur Lösung dieser Aufgabe ist vorgesehen, daß die Übertrittsstelle durch eine mit einem Durchbruch versehene Zwischenwand eines kleinvolumigen Behälters gebildet wird, in den die Zylinder-Saugrohre beidseitig der Zwischenwand über die sich jeweils an die Zwischenwand anschließenden, einander im wesentlichen gegenüberliegenden Behälterseitenwände münden. Vorteilhafte Aus- und Weiterbildungen der Erfindung beschreiben die Unteransprüche.

Erfindungsgemäß ist die Übertrittsstelle als äußerst kleinvolumiger Behälter ausgebildet, der mit einer einen verschließbaren Durchbruch aufweisenden Zwischenwand versehen ist. Dieser Behälter wirkt zugleich als Zusammenführung der einzelnen Zylinder-Saugrohre in die Gruppensaugrohre und kann äußerst kleinvolumig gehalten werden, wenn die beiden Zylinder-Saugrohre, die jeweils zu einem Gruppensaugrohr zusammengeführt werden, in einander im wesentlichen gegenüberliegenden Behälterseitenwänden münden. Diese einander gegenüberliegenden Behälterseitenwände sind durch die einen Durchbruch aufweisende Zwischenwand miteinander verbunden, wobei beidseitig der Zwischenwand Zylindersaugrohre münden, so daß der Durchbruch als Übertrittsstelle der dann beidseitig der Zwischenwand liegenden Gruppensaugrohre fungiert. Somit ist nicht nur die Zusammenführung der Zylinder-Saugrohre zu den Gruppensaugrohren mit der Übertrittsstelle baulich zusammengefaßt, sondern es ergibt sich darüber hinaus zusätzlich eine äußerst kompakte, gewünscht kleinvolumige Bauweise.

Um die Übertrittsstelle auf einfache Weise den Anforderungen genügend dicht verschließen zu können, kann eine dem Durchbruch angepaßte Klappe vorgesehen sein, die über eine Öffnung in einer Wand des kleinvolumigen Behälters eingesetzt werden kann. Auch mit den Merkmalen des Anspruchs 3 läßt sich eine erfindungsgemäße Sauganlage in einfacher Weise fertigen, da sich mit der beschriebenen Mehrteiligkeit und der angegebenen Trennebene relativ einfache Gußteile ergeben. Bei der Auslegung einer erfindungsgemäßen Sauganlage hat sich darüber hinaus gezeigt, daß für eine optimale Charakteristik der Sauganlagen-Dynamik ein den Gruppensaugrohren vorgeschalteter Sammelbehälter ebenfalls relativ kleinvolumig sein sollte, wozu dieser im wesentlichen rohrverzweigungsartig ausgebildet ist. Im Sinne einer einfachen Fertigung ist diesem in üblicher Weise eine Drosselklappe vorgeschaltet.

Ein bevorzugtes Ausführungsbeispiel dient der näheren Erläuterung der Erfindung.

Fig. 1     zeigt eine teilweise geschnittene Seitenansicht,

Fig. 2     zeigt eine Aufsicht gemäß der Schnittlinie A-A aus Fig. 1.

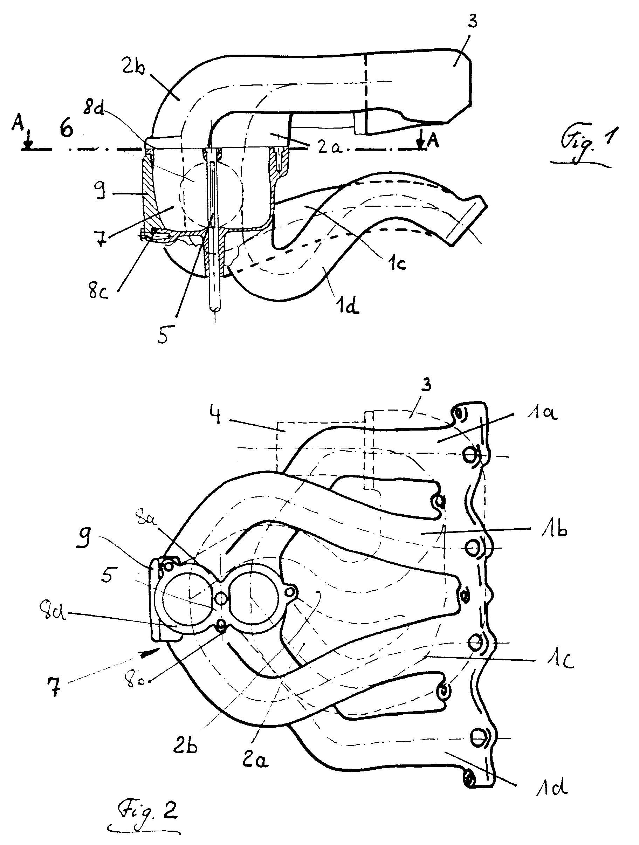

Die Sauganlage einer vierzylindrigen Brennkraftmaschine besteht aus den vier Zylinder-Saugrohren 1a, 1b, 1c, 1d, von denen jeweils zwei zu Gruppensaugrohren 2a, 2b zusammengeführt werden, die ihrerseits in einen Sammelbehälter 3 münden, dem eine Drosselklappe 4 vorgeschaltet ist. Über ein nicht gezeigtes, stromauf der Drosselklappe 4 angeordnetes Luftfilter gelangt Umgebungsluft in die Sauganlage und über die Zylinder-Saugrohre 1a bis 1d in die einzelnen Zylinder der nicht gezeigten Brennkraftmaschine.

Die Gruppensaugrohre 2a, 2b sind durch eine verschließbare Übertrittsstelle miteinander verbindbar. Diese Übertrittsstelle wird durch die mit einem Durchbruch versehene Zwischenwand 5 eines kleinvolumigen Behälters 7 gebildet. Geschlossen werden kann der Durchbruch mittels einer in der Zwischenwand 5 angeordneten Schaltklappe 6.

In den kleinvolumigen Behälter 7 münden in die sich jeweils an die Zwischenwand 5 anschließenden, einander im wesentlichen gegenüberliegenden Behälterseitenwände 8a, 8b jeweils zwei der Zylinder-Saugrohre 1a bis 1d. Die Anordnung ist dabei so getroffen, daß die beiden Zylinder-Saugrohre 1a und 1d auf der einen Seite der Zwischenwand 5 in den Behälter 7 münden und somit zum Gruppensaugrohr 2a zusammengeführt sind, während sich die Zylinder-Saugrohre 1b, 1c auf der anderen Seite der Zwischenwand 5 zum Gruppensaugrohr 2b vereinigen. Mit dieser Anordnung wird, da der Behälter 7 zugleich die Übertrittsstelle zwischen den beiden Gruppensaugrohren 2a, 2b bildet, eine äußerst kompakte Bauweise geschaffen, die das über das reine Volumen der einzelnen Zylinder-Saugrohre 1a bis 1d hinausgehende Volumen äußerst gering hält. Im Hinblick auf eine optimale Sauganlagen-Dynamik sollte dieses zusätzliche Volumen nämlich so gering als möglich sein.

In der Behälterwand 8c ist eine mit einem Deckel 9 verschlossene Öffnung vorgesehen, über die die den Durchbruch verschließende Schaltklappe 6 eingesetzt werden kann. Ferner ist die Behälterwand 8d, aus der die beiden Gruppensaugrohre 2a, 2b austreten, flanschartig ausgebildet. Auf diesen Flansch bzw. auf diese Behälterwand 8d kann das Sauganlagen-Oberteil, bestehend aus den beiden Gruppensaugrohren 2a, 2b sowie dem Sammelbehälter 3, aufgesetzt werden. Diese Zweiteiligkeit in ein Sauganlagen-Oberteil sowie ein aus den Zylinder-Saugrohren 1a bis 1d sowie dem Behälter 7 bestehendes Sauganlagen-Unterteil ermöglicht eine gießtechnisch einfache Fertigung. Besonders vorteilhaft sind beim gezeigten Ausführungsbeispiel darüber hinaus die Zylinder-Saugrohre 1a bis 1d angeordnet. Indem sich die jeweils beidseitig des Behälters 7 vorgesehenen Zylinder-Saugrohre 1a und 1b bzw. 1c und 1d überkreuzen, ergibt sich für das Sauganlagen-Unterteil bei gleicher Länge der einzelnen Zylinder-Saugrohre eine äußerst kompakte Bauweise. Diese sowie weitere konstruktive Merkmale können jedoch durchaus anders gestaltet werden, ohne den Inhalt der Patentansprüche zu verlassen.

**Patentansprüche**

1. Sauganlage für eine mehrzylindrige, insbesondere vierzylindrige Brennkraftmaschine, wobei die Saugrohre (1a bis 1d) jeweils zweier Zylinder gruppenweise zusammengefaßt und die sich daraus ergebenden Gruppensaugrohre (2a, 2b) durch eine verschließbare Übertrittsstelle miteinander verbunden sind,
dadurch gekennzeichnet, daß die Übertrittsstelle durch eine mit einem Durchbruch versehene Zwischenwand (5) eines kleinvolumigen Behälters (7) gebildet wird, in den die Zylinder-Saugrohre (1a bis 1d) beidseitig der Zwischenwand (5) über die sich jeweils an die Zwischenwand (5) anschließenden, einander im wesentlichen gegenüberliegenden Behälterseitenwände (8a, 8b) münden.

2. Sauganlage nach Anspruch 1,
dadurch gekennzeichnet, daß in den Durchbruch der Behälter-Zwischenwand (5) eine über eine Öffnung in einer Behälterwand (8c) einführbare Klappe (6) eingesetzt ist.

3. Sauganlage nach Anspruch 1 oder 2,
dadurch gekennzeichnet, daß die Gruppensaugrohre (2a, 2b) vom Behälter (7) über eine flanschartig ausgebildete, an der Zwischenwand (5) anliegende Behälterwand (8d) austreten, wobei die Sauganlage in der Ebene der flanschartig ausgebildeten Behälterwand (8d) geteilt ist.

4. Sauganlage nach einem der Ansprüche 1 bis 3,
dadurch gekennzeichnet, daß die Gruppensaugrohre (2a, 2b) in einen rohrverzweigungsartig ausgebildeten Sammelbehälter (3) münden, dem eine Drosselklappe (4) vorgeschaltet ist.

Fig. 1

Fig. 2

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 618 489 (PEUGEOT) 27. Januar 1989<br>* Zusammenfassung *<br>* Seite 2, Zeile 22 - Seite 3, Zeile 5 *<br>* Seite 3, Zeile 28 - Seite 4, Zeile 13 * | 1,3 | F02B27/02 |
| Y | * Seite 6, Zeile 9 - Zeile 15; Abbildungen 1-5 * | 2,4 | |
| | --- | | |
| Y | WO-A-8 707 926 (FORD) 30. Dezember 1987<br>* Seite 2, Zeile 1 - Zeile 33 *<br>* Seite 3, Zeile 20 - Zeile 22 * | 2 | |
| A | * Seite 3, Zeile 27 - Seite 5, Zeile 9; Abbildung 1 * | 1,4 | |
| | --- | | |
| Y | US-A-4 989 553 (UEDA) 5. Februar 1991<br>* Spalte 6, Zeile 64 - Spalte 7, Zeile 23; Abbildung 1 * | 4 | |
| | --- | | |
| A | FR-A-958 037 (PATERAS PESCARA) 1. März 1950<br>* Seite 4, linke Spalte, Absatz 4 - Seite 5, rechte Spalte, Absatz 1; Abbildungen 8-10 * | 1 | |
| | --- | | |
| A | DE-A-3 831 085 (BMW) 15. März 1990<br>* Spalte 2, Zeile 13 - Zeile 21 * | 1,2,4 | RECHERCHIERTE SACHGEBIETE (Int. Cl.5) |
| | --- | | |
| A | US-A-2 862 490 (TRISLER) 2. Dezember 1958<br>* Spalte 1, Zeile 15 - Zeile 18 *<br>* Spalte 2, Zeile 11 - Zeile 15 *<br>* Spalte 3, Zeile 2 - Zeile 15 *<br>* Spalte 5, Zeile 11 - Zeile 51 * | 1 | F02B<br>F02M |
| | --- | | |
| A | EP-A-0 159 803 (GM) 30. Oktober 1985<br>* Seite 12, Zeile 4 - Zeile 24; Abbildung 9 * | 1 | |
| | --- | | |
| A | DE-C-893 728 (DAIMLER-BENZ) 19. Oktober 1953<br>* Seite 2, Zeile 62 - Zeile 79; Abbildung 2 * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 23 JUNI 1992 | JORIS J.C. |